Europäisches Patentamt

European Patent Office

Office européen des brevets

(19)

(11) Veröffentlichungsnummer: **0 151 104**
A2

# (12) EUROPÄISCHE PATENTANMELDUNG

(21) Anmeldenummer: 85890023.6

(22) Anmeldetag: 31.01.85

(51) Int. Cl.⁴: **A 01 M 7/00**

(30) Priorität: 31.01.84 AT 303/84

(43) Veröffentlichungstag der Anmeldung: 07.08.85
Patentblatt 85/32

(84) Benannte Vertragsstaaten: BE CH DE FR GB IT LI LU NL

(71) Anmelder: **Assmann Kunststoffindustrie Gesellschaft
m.b.H., A-8443 Gleinstätten (AT)**

(72) Erfinder: **Jessernigg, Werner, Austrasse 5,
A-2000 Stockerau (AT)**

(74) Vertreter: **Boeckmann, Peter, Dipl.-Ing. et al,
Patentanwälte Dipl.-Ing. Peter Boeckmann, Dipl.-Ing.
Leo Brauneiss Strohgasse 10, A-1030 Wien (AT)**

(54) Vorrichtung zum Ausbringen von Flüssigkeiten insbesondere zum Besprühen von Wein-und Obstkulturen.

(57) Eine Vorrichtung zum Ausbringen von Flüssigkeiten, insbesondere von Flüssigkeiten zum Besprühen von Wein- und Obstkulturen, weist einen an einem Traktor od. dgl. befestigbaren Flüssigkeitsbehälter (1) auf, der mit einem den Behälter (1) etwa in horizontaler Richtung durchsetzenden Tunnel (5) versehen ist, der von der dem Traktor zugewendeten Behälterwand (6) zu der dem Traktor abgewendeten Behälterwand (7) verläuft. Der Tunnel (5) ist in seinem Inneren von Behälterwänden vollständig umschlossen, steht also nicht mit dem die auszubringende Flüssigkeit enthaltenden Behälterraum (8) in Verbindung.

Im Tunnel (5) befindet sich eine Pumpe (9), über welche die im Behälterinhalt befindliche Flüssigkeit Sprühdüsen (10) im Bereich der Behälterwand (7) zugeführt wird. Über ein mit der Pumpe (9) gekuppeltes Getriebe wird ein Ventilatorflügel (12) angetrieben, durch welchen Luft entlang von Leitschaufeln (13) in den Bereich der Düsen (10) gefördert wird. Der Antrieb der Pumpe (9) und des Ventilatorflügels (12) erfolgt durch eine Gelenkwelle (14) von der Zapfwelle (15) des Traktors aus.

Die Gelenkwelle (14), die Pumpe (9), die Düsen (10), das Getriebe (11) mit dem Ventilatorflügel (12) und die Leitschaufeln (13) bilden ein Aggregat für die Förderung und Zerstäubung der im Behälterraum (8) befindlichen Flüssigkeit. Dieses Aggregat ist mit einem Halterahmen (16) verbunden, der um eine im wesentlichen vertikal verlaufende Achse (18) aus dem Tunnel (5) herausschwenkbar angeordnet ist und der in der im Tunnel (5) eingeschwenkten Lage des Aggregates an der Aussenseite der die Tunnelöffnung aufweisenden Behälterwand (7) anliegt.

- 1 -

Vorrichtung zum Ausbringen von Flüssigkeiten, insbesondere zum Besprühen von Wein- und Obstkulturen

Die Erfindung betrifft eine Vorrichtung zum Ausbringen
von Flüssigkeiten, insbesondere zum Besprühen von Wein- und
Obstkulturen, mit einem an einem Traktor od. dgl. befestigbaren Flüssigkeitsbehälter, der mit einem den Behälter
durchsetzenden Tunnel versehen ist, der ein Aggregat für
die Förderung und/oder das Ausbringen des flüssigen Behälterinhaltes sowie gegebenenfalls für die Erzeugung eines
Luftstromes aufnimmt.

Zum Besprühen von Feldfrüchten ist es bekannt, Kunststoffbehälter an der Rückseite eines Traktors mittels dessen Dreipunktaufhängung zu befestigen. Die im Behälter befindliche, zu versprühende Flüssigkeit wird mittels einer
Pumpe aus dem Behälter zu im Bereich der dem Traktor abgewendeten Behälterseite vorgesehenen Sprühdüsen gefördert,
durch die die im Behälter befindliche Flüssigkeit in zerstäubter Form austritt. Im Bereich der Sprühdüsen ist in
der Regel eine Luftverteilungseinrichtung vorgesehen, die
aus einem Propeller oder einem Flügelrad besteht. Diese
Luftverteilungseinrichtung erzeugt einen Luftstrom, der einerseits eine Bewegung der Blätter der zu besprühenden
Wein- und Obstkulturen bewirkt, so daß diese auf allen Seiten mit der versprühten Flüssigkeit in Berührung kommen,
anderseits auch die über die Düsen zerstäubte Flüssigkeit
mitreißt, so daß ein größerer Bereich besprüht wird. Die
Pumpe und die Luftverteilungseinrichtung werden von der
Zapfwelle des Traktors über eine Gelenkwelle angetrieben,
wobei in der Regel in den Antrieb noch ein Getriebe eingeschaltet ist. Die Antriebskraft muß also von der dem Traktor zugewendeten Behälterseite, welche der Zapfwelle des Traktors benachbart ist, zu der dem Traktor abgewendeten Behälterseite, wo die Sprühdüsen und die Luftverteilungseinrichtung vorgesehen sind, übertragen werden.

Es ist bekannt, die Gelenkwelle und Teile des aus Pumpe, Getriebe und Luftverteilungseinrichtung bestehenden Aggregates unterhalb des Behälters vorzusehen. Eine solche Ausbildung weist den Nachteil auf, daß der Behälter sehr hoch gelagert sein muß und daß daher auch der Behälterschwerpunkt einen großen Abstand vom Boden aufweist. Dies bewirkt jedoch, daß die Gefahr eines Umkippens des den Behälter transportierenden Traktors insbesondere beim Fahren auf unebenem oder steilen Grund groß ist.

Man hat daher bereits vorgeschlagen, daß aus Pumpe, Getriebe und Luftverteilungseinrichtung bestehende Aggregat sowie die Gelenkwelle zumindest teilweise in einem den Behälter von der dem Traktor zugewendeten Behälterseite zu der dem Traktor abgewendeten Behälterseite durchsetzenden Tunnel anzuordnen. Dieser Tunnel kann nach unten zu offen sein, zweckmäßig ist es jedoch, einen vollständig geschlossenen Tunnel vorzusehen, also unterhalb des Tunnels noch einen Behälterhohlraum vorzusehen, da hiedurch ein vollständiges Ausbringen des Behälterinhaltes möglich ist. Diese Ausbildung ermöglicht es, den Behälter wesentlich tiefer zu setzen, da nun nicht mehr die Gelenkwelle und das erwähnte Aggregat unterhalb des Behälters angeordnet sein müssen. Dadurch wird die Gefahr eines Umkippens wesentlich verringert.

Bei den bisher vorgeschlagenen Ausführungen ist nun das Aggregat fest mit dem Behälter verschraubt. Um Wartungsarbeiten an den innerhalb des Tunnels vorgesehenen Teilen des Aggregates, also vor allem an der Pumpe und gegebenenfalls auch am Getriebe, vorzunehmen, muß daher die Verschraubung gelöst werden und es müssen gleichzeitig Maßnahmen getroffen werden, damit das Aggregat nach dem Lösen der Verschraubung gehalten wird und ohne Beschädigung sowohl des Aggregates als auch des Behälters aus dem Tunnel herausgeführt werden kann. Eine solche Vorgangsweise ist sehr aufwendig und zeitraubend und benötigt den Einsatz mehrerer Personen. Ein weiterer Nachteil der bekannten Ausbildung besteht darin, daß das Schauglas der Pumpe, welches die Menge des Schmieröles anzeigt, nicht oder zumindest nur erschwert sichtbar ist und daß daher auch die Kontrolle des Ölstandes der Pumpe nur äußerst schwierig durchzuführen ist.

Die vorliegende Erfindung hat sich zur Aufgabe gestellt, die erwähnten Nachteile zu vermeiden und eine Vorrichtung der eingangs beschriebenen Art derart zu verbessern, daß die Wartungsmaßnahmen für das im Tunnel befindliche Aggregat auf einfache Weise vorgenommen werden können. Die Erfindung besteht hiebei im wesentlichen darin, daß das Aggregat um eine, vorzugsweise im wesentlichen vertikal verlaufende, Achse aus dem Tunnel herausschwenkbar gelagert ist. Die erfindungsgemäße Ausbildung ermöglicht es, nach Lösen einer Arretiervorrichtung, durch welche das Aggregat in seiner Betriebsstellung gehalten wird, dieses Aggregat so zu verschwenken, daß alle Teile, welche einer Kontrolle und Wartung unterzogen werden müssen, frei zugänglich sind, ohne daß zahlreiche Verbindungsschrauben gelöst werden müssen und ohne daß das Aggregat vollständig vom Behälter gelöst wird. Das Verschwenken kann mühelos von einer einzigen Person vorgenommen werden, ohne daß hiefür irgendwelche Hilfsvorrichtungen notwendig sind, da ja das Aggregat über die Schwenkachse weiterhin mit dem Behälter verbunden ist. Dadurch wird nicht nur die Wartung wesentlich vereinfacht, sondern auch ohne Schwierigkeiten eine Betrachtung von den einwandfreien Betriebszustand anzeigenden Einrichtungen, beispielsweise eines Ölstandsmeßglases, ermöglicht, wobei dann, wenn die Verschwenkung um eine im wesentlichen vertikal verlaufende Achse erfolgt, wie dies bevorzugt geschieht, diese Kontrolleinrichtungen auch im herausgeschwenkten Zustand des Aggregates die für die Ablesung richtige Lage einnehmen.

Zweckmäßig ist das Aggregat mit einer ein Scharnierge-

- 4 -

lenk aufweisenden verschwenkbaren Halterung, beispielsweise einer Halteplatte oder einem Halterahmen, verbunden, welche Halterung in der in den Tunnel eingeschwenkten Lage des Aggregates an der Außenseite der die Tunnelöffnung aufweisenden Behälterwand anliegt. Eine solche Ausführungsform ermöglicht in einfacher Weise eine Verschwenkung sämtlicher Bestandteile des Aggregates über die Halterung, wobei die bisher verwendeten Bestandteile des Aggregates auch bei der erfindungsgemäßen Ausbildung Verwendung finden können, wobei die Befestigung dieser Bestandteile nun nicht am Behälter direkt, sondern an der verschwenkbaren Halterung erfolgt.

Wie bereits erwähnt, besteht der Behälter in der Regel aus Kunststoff. Wird nun das Scharniergelenk direkt am Behälter befestigt, so besteht die Gefahr, daß sich der Kunststoffbehälter durch die einseitige Belastung verzieht. Um dies zu vermeiden, ist gemäß einem weiteren Merkmal der Erfindung mit der Außenseite der die Tunnelöffnung aufweisenden Behälterwand eine Halterung, beispielsweise eine Halteplatte oder ein Halterahmen, fest verbunden, welche mit dem Behälter fest verbundene Halterung mit der das Aggregat tragenden verschwenkbaren Halterung über das Scharniergelenk verbunden ist. Die Befestigung der mit dem Behälter fest verbundenenHalterung kann hiebei so erfolgen wie die Befestigung des Aggregates am Behälter bei der bekannten Ausführungsform erfolgt ist. Die Anordnung dieser mit dem Behälter fest verbundenen Halterung bewirkt eine gleichmäßige Verteilung der Belastung auf die Behälterwand, so daß eine konstruktive Abänderung des Behälters gegenüber der bekannten Ausführung nicht erforderlich ist. Zweckmäßig ist die mit dem Behälter fest verbundene Halterung mit einer den Behälter abstützenden, mit dem Traktor od. dgl. verbindbaren Stützeinrichtung starr verbunden. Durch die so hergestellte Einheit zwischen der mit dem Behälter fest verbundenen Halterung und der Stützeinrichtung, über welche der Behälter am Traktor abgestützt ist, wird zumindest ein Teil des Gewichtes des Aggregates unmittelbar über die Stützeinrichtung auf die Traktoraufhängung übertragen und hiedurch der Behälter entlastet. Die Stützeinrichtung kann erfindungsgemäß an der Behälterunterseite verlaufende Kufen aufweisen, welche mit der mit dem Behälter fest verbundenen Halterung verbunden sind. Diese Kufen ermöglichen ein Abstellen des Behälters am Erdboden, wenn dieser vom Traktor od. dgl. abgekuppelt ist, sowie ein Verfahren des abgekuppelten Behälters über kurze Strecken, wobei dadurch, daß die behälterfeste Halterung mit diesen Kufen verbunden ist, auch in diesem Fall zumindest ein Teil des Gewichtes des Aggregates direkt auf die von den Kufen gebildete Abstützfläche übertragen wird und eine Entlastung des Behälters erfolgt.

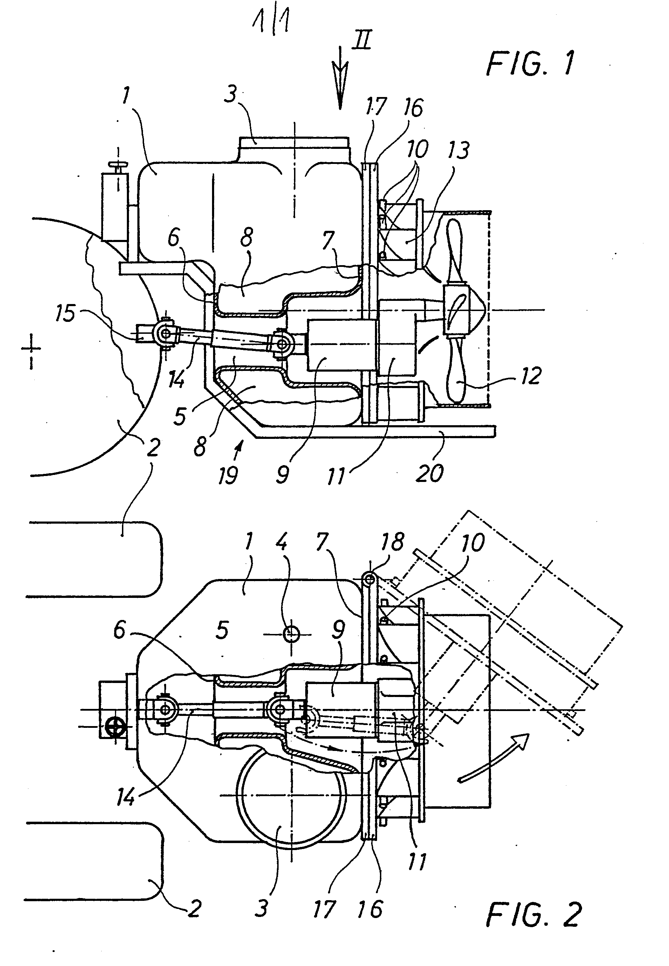

In der Zeichnung ist die Erfindung an Hand eines Ausführungsbeispieles schematisch veranschaulicht. Fig. 1 zeigt eine Seitenansicht einer erfindungsgemäßen Vorrichtung, teilweise im Schnitt.

Fig. 2 stellt eine Draufsicht auf die erfindungsgemäße Vorrichtung in Richtung des Pfeiles II in Fig. 1 dar.

Die erfindungsgemäße Vorrichtung weist einen Behälter 1 auf, der an einem Traktor abnehmbar befestigt ist, von welchem in der Zeichnung lediglich die Hinterräder 2 angedeutet sind. Der Behälter 1 weist eine solche Form auf, daß bei möglichst großem Behältervolumen die Baulänge möglichst gering ist. An seiner Oberseite weist der Behälter eine durch einen Deckel 3 verschlossene Einfüllöffnung sowie ein weiteres Einfülloch 4 für die Aufnahme eines Wasserschlauches auf.

In der unteren Hälfte des Behälters 1 ist ein Tunnel 5 angeordnet, der von der dem Traktor zugewendeten Behälterwand 6 zu der dem Traktor abgewendeten Behälterwand 7 verläuft und in den genannten Behälterwänden eine Tunnelöffnung aufweist. Der Tunnel 5 ist in seinem Inneren von Behälterwänden vollständig umschlossen, steht also nicht mit dem die auszubringende Flüssigkeit enthaltenden Behälterraum 8 in Verbindung. Dieser Behälterraum 8 umgibt den Tunnel allseitig, ein Teil dieses Behälterraumes 8 befindet sich also auch unterhalb des Tunnels. Dadurch ist trotz der Anordnung des Tunnels eine vollständige Entleerung des Behälterraumes möglich.

Die im Behälterraum befindliche Flüssigkeit wird über nicht dargestellte Rohrleitungen und Schläuche mittels einer Pumpe 9 Sprühdüsen 10 zugeführt und mittels dieser Sprühdüsen versprüht bzw. zerstäubt. Über ein mit der Pumpe 9 gekuppeltes Getriebe 11 wird ein Ventilatorflügel 12 angetrieben, durch welchen Luft entlang von Leitschaufeln 13 in den Bereich der Düse 10 gefördert wird. Dadurch wird eine Luftströmung erzeugt, welche die Blätter der zu besprühenden Kulturen bewegt und die zerstäubte Flüssigkeit über einen größeren Bereich verteilt.

Der Antrieb der Pumpe 9 und des Ventilatorflügels 12 über das Getriebe 11 erfolgt durch eine Gelenkwelle 14 von der Zapfwelle 15 des Traktors aus.

Die Gelenkwelle 14, die Pumpe 9, die Düsen 10, das Getriebe 11 mit dem Ventilatorflügel 12 und die Leitschaufeln 13 bilden ein Aggregat für die Förderung und Zerstäubung der im Behälterraum 8 befindlichen Flüssigkeit sowie zur Erzeugung eines Luftstromes. Teile dieses Aggregates sind im Tunnel 5 angeordnet, dessen unterschiedlicher Querschnitt den Abmessungen der im Tunnel befindlichen Bestandteile angepaßt ist. Die erwähnten Bestandteile des Aggregates sind mit einem verschwenkbaren Halterahmen 16 verbunden, der in der Betriebsstellung an einem mit dem Behälter verbundenen Halterahmen 17 anliegt, welcher mittels Schrauben od. dgl. an der Behälterwand 7 befestigt ist. Die Verschwenkung des verschwenkbaren Halterahmens 16 gegenüber dem mit dem Behälter fest verbundenen Halterahmen 17 erfolgt über ein Scharniergelenk 18 mit im wesentlichen vertikal verlaufender Achse. In der Betriebsstellung der Vorrichtung, welche in Fig. 2 in vollen Linien dargestellt ist, ist der verschwenkbare Halterahmen 16 mit dem mit dem Behälter fest

- 7 -

verbundenen Halterahmen 17 über eine nicht dargestellte Verriegelungsvorrichtung verbunden. Sollen Wartungsarbeiten durchgeführt und/oder Überwachungseinrichtungen kontrolliert, beispielsweise der Ölstand an einem Schauglas festgestellt werden, so werden die Kupplung der Gelenkwelle 14 mit der Zapfwelle 15 des Traktors und die genannte Verriegelungseinrichtung zwischen den beiden Halterahmen 16, 17 gelöst, worauf das Aggregat um das Scharniergelenk 18 in die in Fig. 2 strichpunktiert dargestellte Lage verschwenkt werden kann.

Die Befestigung der Vorrichtung am Traktor 1 erfolgt über eine Stützeinrichtung 19, welche den Behälter 1 abstützt und in bekannter, nicht näher dargestellter Weise mit der hydraulischen Hebeeinrichtung an der Rückseite des Traktors verbunden ist. Diese Stützeinrichtung weist an der Behälterunterseite verlaufende Kufen 20 auf, über welche eine Abstützung der erfindungsgemäßen Vorrichtung am Boden und ein Transport über kurze Strecken möglich ist, wenn die Vorrichtung vom Traktor abgekuppelt ist. Der mit dem Behälter fest verbundene Halterahmen 17 ist mit diesen Kufen 20 starr verbunden, so daß zumindest ein Teil des Gewichtes des Aggregates, welches über das Scharniergelenk 18 auf den mit dem Behälter fest verbundenen Halterahmen übertragen wird, direkt von den Kufen 20 bzw. von der Stützeinrichtung 19 aufgenommen wird. Dadurch wird der Behälter 1 entlastet.

- 1 -

Patentansprüche :

1. Vorrichtung zum Ausbringen von Flüssigkeiten, insbesondere zum Besprühen von Wein- und Obstkulturen, mit einem an einem Traktor od. dgl. befestigbaren Flüssigkeitsbehälter (1), der mit einem den Behälter (1) durchsetzenden Tunnel (5) versehen ist, der ein Aggregat (8 bis 14) für die Förderung und/oder das Ausbringen des flüssigen Behälterinhaltes sowie gegebenenfalls für die Erzeugung eines Luftstromes aufnimmt, dadurch gekennzeichnet, daß das Aggregat (8 bis 14) um eine, vorzugsweise im wesentlichen vertikal verlaufende, Achse (18) aus dem Tunnel (5) herausschwenkbar gelagert ist.

2. Vorrichtung nach Anspruch 1, dadurch gekennzeichnet, daß das Aggregat (8 bis 14) mit einer ein Scharniergelenk (18) aufweisenden verschwenkbaren Halterung (16), beispielsweise einer Halteplatte oder einem Halterahmen, verbunden ist, welche Halterung (16) in der in den Tunnel (5) eingeschwenkten Lage des Aggregates (8 bis 14) an der Außenseite der die Tunnelöffnung aufweisenden Behälterwand (7) anliegt.

3. Vorrichtung nach Anspruch 1 und 2, dadurch gekennzeichnet, daß mit der Außenseite der die Tunnelöffnung aufweisenden Behälterwand (7) eine Halterung (17), beispielsweise eine Halteplatte oder ein Halterahmen, fest verbunden ist, welche Halterung (17) mit der das Aggregat tragenden verschwenkbaren Halterung (16) über das Scharniergelenk (18) verbunden ist.

4. Vorrichtung nach Anspruch 1, 2 oder 3, dadurch gekennzeichnet, daß die mit dem Behälter fest verbundene Halterung (17) mit einer den Behälter (1) abstützenden, mit dem Traktor od. dgl. verbindbaren Stützeinrichtung (19) starr verbunden ist.

5. Vorrichtung nach Anspruch 4, dadurch gekennzeichnet, daß die Stützeinrichtung (19) an der Behälterunterseite verlaufende Kufen (20) aufweist, welche mit der mit dem Behälter fest verbundenen Halterung (17) verbunden sind.

FIG. 1

FIG. 2

0151104